(19) Europäisches Patentamt
European Patent Office
Office européen des brevets

(11)  EP 1 813 026 B1

(12)  **EUROPÄISCHE PATENTSCHRIFT**

(45) Veröffentlichungstag und Bekanntmachung des Hinweises auf die Patenterteilung:
**13.06.2012  Patentblatt 2012/24**

(21) Anmeldenummer: **05807495.6**

(22) Anmeldetag: **27.10.2005**

(51) Int Cl.:
*H04B 1/64* (2006.01)    *H03G 7/00* (2006.01)
*H04B 1/66* (2006.01)    *H04B 1/04* (2006.01)

(86) Internationale Anmeldenummer:
**PCT/EP2005/011495**

(87) Internationale Veröffentlichungsnummer:
**WO 2006/045605 (04.05.2006 Gazette 2006/18)**

(54)  **SENDER UND EMPFÄNGER FÜR EIN DRAHTLOSES AUDIO-ÜBERTRAGUNGSSYSTEM**

TRANSMITTER AND RECEIVER FOR A WIRELESS AUDIO TRANSMISSION SYSTEM

EMETTEUR ET RECEPTEUR POUR SYSTEME DE TRANSMISSION AUDIO SANS FIL

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **27.10.2004  DE 102004052296**

(43) Veröffentlichungstag der Anmeldung:
**01.08.2007  Patentblatt 2007/31**

(73) Patentinhaber: **Sennheiser electronic GmbH & Co. KG**
**30900 Wedemark (DE)**

(72) Erfinder:
• **MEYER, Rolf**
  **30974 Wennigsen (DE)**
• **PEISSIG, Jürgen**
  **30167 Hannover (DE)**
• **BUHE, Gerrit**
  **30900 Wedemark (DE)**

(74) Vertreter: **Eisenführ, Speiser & Partner**
**Postfach 10 60 78**
**28060 Bremen (DE)**

(56) Entgegenhaltungen:
**US-A- 3 846 719        US-A1- 2004 158 458**
**US-B1- 6 615 025**

• **B. RIMOLDI ET. AL.: "The Communications Handbook" 1997, CRC PRESS , FLORIDA , XP002367087 Seite 224 - Seite 226; Abbildungen 18.1,18.2**
• **SHANNON C E: "THE MATHEMATICAL THEORY OF COMMUNICATION" MD COMPUTING, SPRINGER, NEW YORK, NY, US, Bd. 14, Nr. 4, 1997, Seiten 306-317, XP000856516 ISSN: 0724-6811**
• **KEN GUNDRY: "An Introduction to Noise Reduction" 2003, DOLBY LABORATORIES INC. , XP002383062 Seite 31; Abbildung 5 Seite 31; Abbildung 5**

**Beschreibung**

Die Erfindung betrifft einen Empfänger sowie einen Sender für ein drahtloses Übertragungssystem.

Bei drahtlosen Audio-Übertragungssystemen wie beispielsweise bei drahtlosen Mikrofonen, bei In-Ear-Monitoren und bei Kinnbügelhörern wird mittlerweile dazu übergegangen, derartige Übertragungssysteme mit analogen und digitalen Funktionseinheiten, d. h. auf einer Hybridbasis, zu realisieren. Insbesondere wird die relativ einfache aber robuste analoge FM-Übertragung der Audiosignale mit den Vorteilen der digitalen Signalverarbeitung kombiniert. Bei einem herkömmlichen Ansatz für ein Hybrid-übertragungssystem, wie beispielsweise einem Hybrid-Mikrofon, wird ein eingegebenes analoges Audiosignal durch einen Analog/Digital-Wandler digitalisiert und einer digitalen Signalverarbeitungseinheit zugeführt, wo das digitalisierte Signal entsprechend verarbeitet und anschließend durch einen Digital/Analog-Wandler wiederum in analoge Signale umgewandelt wird. Die umgewandelten analogen Signale werden durch eine analoge drahtlose FM-Übertragungsstrecke übertragen und von einem entsprechenden Empfänger empfangen. In dem Empfänger wird das analoge FM-signal erneut digitalisiert, und mittels einer weiteren digitalen Signalverarbeitungseinheit wird das ursprüngliche digitale Audiosignal rekonstruiert. Zur Verbesserung bzw, Steuerung der Übertragung wird dem digitalisierten Audiosignal in der digitalen Signalverarbeitungseinheit des Senders ein Pilotton beigefügt, welches zum Steuern der Stummschaltung (Squelch) des Empfängers dient. Somit werden der Pilotton und das kodierte Audiosignal gemeinsam über die drahtlose FM-Übertragungsstrecke übertragen.

Als allgemeiner Stand der Technik sei auf die Dokumente DE 36 21 513 C2, DE 41 30 045 A1, DE 697 23 959 T2, US 5,845,216 A, US 5,222,250 A, US 6,317,613 B1, US 3846719, US 2004/0158458, und US 6,219,559 B1 hingewiesen.

Es ist Aufgabe der vorliegenden Erfindung, einen verbesserten digitalen Kompressor und Expander für eine digitale Kompandervorrichtung vorzusehen.

Diese Aufgabe wird durch einen digitalen Kompressor gemäß Anspruch 1 und 3 und einen digitalen Expander gemäß Anspruch 2 und 4 gelöst.

Somit wird ein digitaler Kompressor für eine digitale Kompandervorrichtung mit einer Filterbank zum Einteilen eines Eingangssignales in unterschiedliche Frequenzbänder, mindestens einer Multipliziereinheit zum Multiplizieren der unterschiedlichen Frequenzbänder des Eingangssignals mit Gewichtungsfaktoren, einer Summenfilterbank zum Zusammenführen der Ausgangssignale der Multiplikationseinheiten zu einem Filterbank-Gesamtsignal, einer Additionseinheit zum Addieren des Eingangssignals zu dem Filterbank-Gesamtsignal, um ein Ausgangssignal zu erhalten, einer Filterbank-Analyseeinheit zum Analysieren des Ausgangszignals und einer Einhüllenden-Detektionseinheit zum Schätzen der Einhüllenden des Ausgangssignals basierend auf der Analyse des Ausgangssignals durch die Filterbank-Analyseeinheit, um die Gewichtungsfaktoren zu bestimmen, vorgesehen.

Die Erfindung betrifft ferner einen digitalen Expander für eine digitale Kompandervorrichtung mit einer Filterbank zum Einteilen eines Ausganssignals in unterschiedliche Frequenzbänder, mindestens einer Multipliziereinheit zum Multiplizieren der unterschiedlichen Frequenzbänder des Ausgangssignals mit Gewichtungsfaktoren, einer summenfilterbank zum Zusammenführen der Ausgangssignale der Multiplikationseinheiten zu einem Filterbank-Gesamtsignal, einer Additionseinheit zum Subtrahieren des Ausgangssignals von dem Eingangssignal, um ein Ausgangssignal zu erhalten, einer Filterbank-Analyseeinheit zum Analysieren des Eingangssignals und einer Einhüllenden-Detektionseinheit zum Schätzen der Einhüllenden das Eingangssignals basierend auf der Analyse des Eingangssignals durch die Filterbank-Analyseeinheit, um Gewichtungsfaktoren zu bestimmen.

Weitere Ausgestaltungen der Erfindung sind Gegenstand der Unteransprüche.

Nachfolgend wird die vorliegende Erfindung detailliert unter Bezugnahme auf die beigefügte Zeichnung beschrieben.

Figur 1       zeigt ein Blockdiagramm eines Senders,

Figur 2       zeigt ein Blockdiagramm eines Empfängers,

Figur 3       zeigt ein Blockdiagramm eines herkömmlichen analogen Quadraturdemodulators,

Figur 4       zeigt ein Blockdiagramm eines aufwandsoptimierten Quadraturdemodulators,

Figur 5       zeigt ein Blockdiagramm eines weiteren Quadraturdemodulators,

Figur 6       zeigt ein Blockdiagramm der Gesamtanordnung des Quadraturdemodulators,

Figur 7       zeigt ein Blockdiagramm einer digitalen FM-Demodulation,

Figur 8        zeigt ein Blockdiagramm einer weiteren digitalen FM-Demodulation,

Figur 9        zeigt ein schematisches Blockdiagram eines drahtlosen digitalen Audio-Übertragungssystems.

Figur 10a      zeigt ein Blockdiagram eines digitalen Kompressors gemäß einem ersten Ausführungsbeispiel,

Figur 10b      zeigt ein Blockdiagram eines Expanders gemäß einem ersten Ausführungsbeispiel.

Figur 11a      zeigt ein Blockdiagramm eines Kompressors gemäß einem zweiten Ausführungsbeispiel, und

Figur 11b      zeigt ein Blockdiagramm eines Expanders gemäß einem zweiten Ausführungsbeispiel.

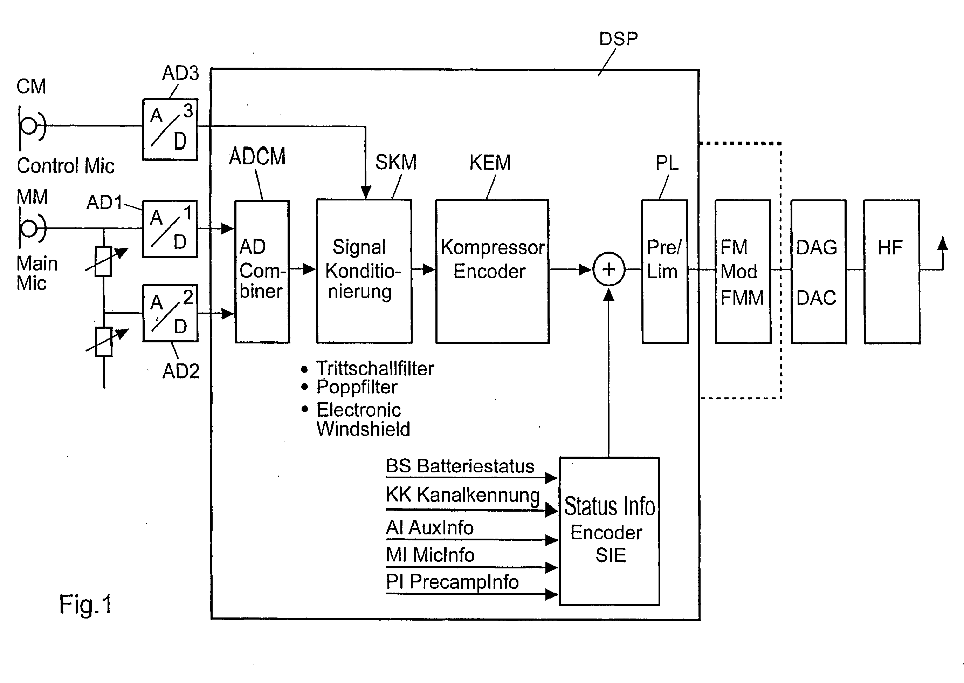

Figur 1 zeigt ein Blockdiagramm eines Senders in einem digitalen drahtlosen Audio-Übertragunsssystem. Der Sender weist drei Analog/Digital-Wandler AD1 bis AD3, eine digitale Signalverarbeitungseinheit DSP_S, ein FM Modulationsmittel FMM, einen Digital/Analog-Wandler DAC und eine HF-Sendeeinheit HF auf. An den Sender ist ein externes Hauptmikrofon MM und ein externes Steuermikrofon CM angeschlossen. Genauer gesagt werden die Audiosignale von dem Hauptmikrofon MM durch den ersten und zweiten Analog/Digital-Wandler AD1, AD2 digitalisiert, und das Audiosignal des Steuermikrofons CM wird durch den dritten Analog/Digital-Wandler AD3 digitalisiert. Die digitale Signalverarbeitungseinheit DSP_S weist ein Analog/Digital-Kombiniermittel ADCM, ein Signalkonditionierungsmittel SKM, ein Kompressor-/Encodermittel KEM, ein statusinformationsencoder SIE sowie ein Pre-Emphase-/Limitermittel PL auf. Optional kann die FM-Modulation des FM-Modulatormittels FMM ebenfalls innerhalb der digitalen Signalverarbeitungseinheit DSP_S implementiert werden.

Die von dem Steuermikrofon CM aufgenommenen analogen Audiosignale werden durch den dritten Analog/Digital-Wandler AD3 digitalisiert. Das Analog/Digital-Kombiniermittel ADCM wird dazu verwendet, die Ausgangssignale des ersten und zweiten Analog/DigitalWandlers AD1, AD2 zu kombinierten, um einen über den einzelnen Wandler hinausgehenden Signal-Rauschapstand zu erhalten. In dem Signalkonditioniermittel SKM werden die Ausgangssignale des Analag/Digital-Kombiniermittels ADCM und des dritten Analog/Digital-Wandlers AD3 eingegeben, um eine entsprechende Signalkonditionierung durchführen. Genauer gesagt dient das Signalkonditioniermittel SKM dazu, Tritt-, Schall- und Poppgeräusche zu eliminierten. Ferner kann auch eine Beeinflussung des Klanges der digitalisierten Audiosignale durchgeführt werden, um Eigenschaften der Kapsel in den beiden Mikrofonen MM, CM zu kompensieren.

Das Kompressor-/Encodermittel KEM stellt den Encoderteil eines digitalen Kompanders dar. Durch die digitale Implementierung des Kompanders wird eine vollständige Reziprozität der Signalverarbeitungseinheiten (Wichtungsfilter, Filterbänke, Einhüllendenbestimmung, Zeitkonstanten) von Encoder und Decoder (im entsprechenden Empfängers Im drahtlosen Übertragungssystem) ermöglicht. Ferner ist eine Implementierung von Kurzzeit-Frequenzanalyseverfahren möglich.

Der Statusinformationsencoder SIE dient dazu, Statusinformationen, wie beispielsweise den Batteriezustand BS, die Kanalkennung KK, Hilfsinformationen AI, Mikrofoninformationen MI und/oder Vorverstärkungsinformationen PI, welche vom Sender zum Empfänger zu übertragen sind. bei der FM-Obertragung in dem Basisband oder in dem erweiterten Audioband (20 Hz bis 56 kHz) zu integrieren. Diese digitalen Informationen werden in dem Sender mittels des Statusinformationsencoders SIE kodiert und später im Empfänger dekodiert. Insbesondere werden die zu übertragenden digitalen statusinformationen an den vorhandenen FM-Kanal angepasst. Ferner können für unterschiedliche Kanäle unterschiedliche Pilottöne erzeugt werden. Die digitalen Informationen können beispielsweise in der Amplitude oder/und der Phase der Pilottöne kodiert werden. Das durch das digitale KompressormittelKEM kodierte Audiosignal wird mit dem Statusinformationssignal (beispielsweise Pilotton) von dem Statusinformationsencoder SIE kombiniert, und das kombinierte NF-Signal wird durch eine Pre-Emphase und durch einen Limiter an den Kanal angepasst. Der Limiter PL dient dazu, die Bandbreite das FM Signals zu begrenzen. Optional, d. h. wenn sowohl genügend Strom als auch genügend Prozessorleistung zur Verfügung steht, kann die FM-Modulation durch das FM-Modulationsmittel ebenfalls im digitalen Bereich durchgeführt werden, was zu einem verbesserten Signal-Rausch-Verhältnis (S/N) und zu einer verbesserten Linearität führen kann.

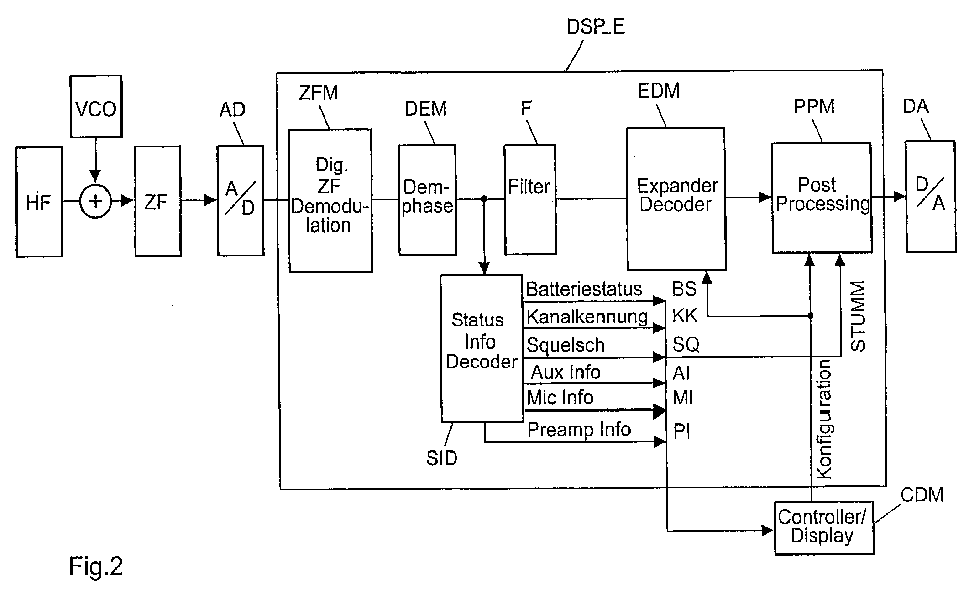

Figur 2 zeigt ein Blockdiagramm eines Empfängers. Der Empfänger gemäß Figur 2 dient zum Empfangen der von dem Sender von Figur 1 übermittelten drahtlosen Signale. Der Empfängers weist eine HF-Empfangseinheit HF, einen Oszillator OSC, eine Zwischenfrequenz-Einheit ZF, einen Analog/Digital-Wandler AD, eine digitale Signalverarbeitungseinheit DSP_E, einen Digital/Analog-Wandler DA sowie eine Steuerungs-/Anzeigeeinheit CDM auf. Der Ausgang der HF-Einheit wird auf eine Zwischenfrequenz ZF gemischt und es wird eine Analog/Digital-Wandlung in dem Analog/Digital-Wandler AD durchgeführt. Diese Analog/Digital-Wandlung erfolgt mit einer entsprechenden Abtastrate, welche es erlaubt, das komplette FM-Spektrum im digitalen Bereich abzubilden. Sie kann sowohl durch Unterabtastung wie auch Überabtastung erfolgen. Die digitale Signalverarbeitungseinheit DSP_E weist ein digitales ZF-Demodulationsmittel ZFM, ein De-Emphasemittel DEM, ein Filter F, einen Statusinformationsdecoder SID, einen Expander/Decoder EDM sowie ein Postverarbeitungsmittel PPM auf.

Am Ausgang des ZF-Demodulationsmittels ZFM wird das NF-Signal ausgegeben, so dass eine De-Emphase in dem De-Emphasemittel DEM durchgeführt werden kann, Der Ausgang des De-Emphasemittels DEM wird sowohl an das Filter F als auch an den Statusinformationsdecoder SID weitergeleitet. Die Statusinformationen werden durch den Statusinformationdecoder SID analysiert und in die entsprechenden Einzelinformationen, z. B. den Batteriestatus BS, die Kanalkennung KK, den Squelch SQ, die Aux-Informationen AI, die Mikrofoninformationen MI und die Vorverstärkungsinformationen PI aufgeteilt. Diese Informationen werden an das Steuer-/Anzeigemittel CDM weitergeleitet, welches eine entsprechende Konfiguration des Expanders/Decoders EDM und des Postverarbeltungsmittels PPM einstellt. Ferner wird die Squelchinformation SQ zur Stummschaltung an die Postverarbeitung PPM weitergeleitet. Genauer gesagt kann aus dem Vorhandensein eines Pilottones und der aufgeprägten digitalen Information kanalspezifisch ein Squelch-Kriterium zur Stummschaltung erzeugt werden.

Das durch das Filter F von dem Status-Informationssignal bereinigte Signal wird dem Expander/Decoder DEM zur Expansion des Signalszugeführt und das Ausgangssignal des Expanders/Decoders EDM wird der Audio-/Postverarbeitung zur Vermeidung unerwünschter Audio-Signaleigenschaften zugeführt. Diese Eigenschaften sind zuschaltbar und über die Eingabe der Steuereinheit CDM konfigurierbar. Beispiele für diese zuschaltbaren Funktionen sind eine Stummschaltung, eine lineare Filterung, eine Sibilanz-Reduktion (De-Esser), eine Audio-Kompression, eine Brillianzverstärkung (Exciter).

Der Vorteil einer digitalen Implementierung der Funktionalitäten durch eine digitale SIgnalverarbeitungseinheft. z. B, durch einen digitalen Signalprozessor DSP, liegt im Wesentlichen in einer verbesserten Übertragungseigenschaft, einer Einsparung von Kosten, Platz und Kalibrierungsvorgängen, Des Weiteren werden negative Auswirkungen einer Bauteilalterung der analogen Elemente hiermit verringert und reprogrammierbare Funktionen werden aufgebaut. Diese Funktionen können chipunabhängig realisiert werden und weitere Funktionen können realisiert werden, die auf analoger Basis nicht ohne Weiteres implementierbar sind.

Somit werden die digitalen ZF-. Basisband und NF-Funktionseinheiten, d. h. die Modulation/Demodulation, die Audio-Kompression/Expansion, der Encoder/Decoder von Statusinformationen und die Audio-Pre-/Postverarbeitung in digitalen Einheiten realisiert. Es wird eine Programmierbarkeit und damit eine Steuerung der Übertragungseigenschaften durch das übertragende Signal und eine Erkennung der Senderkonfiguration und somit mittelbar eine Adaption des Empfängers an den Sender erreicht. Dies erweist sich insbesondere dahingehend als vorteilhaft, dass eine Erweiterung des Audiodynamikbereiches von analogen dynamikreduzierten Übertragungsstrecken erreicht wird. Ferner wird die Linearität der Übertragung verbessert, Kompanderartefakte und die Komplexität der Hardware wird ebenfalls reduziert. Der benötigte Abgleichaufwand während der Produktion sowie nach einer Alterung insbesondere der analogen Bauelemente wird verringert, eine freie Konfigurierbarkeit der Kontrollfunktionen und der NF-Übertragungseigenschaften sowie eine komfortable Konfiguration (insbesondere automatisch) der Sende-/Empfangsstrecken hinsichtlich der HF- und Audioübertragungseigenschaften wird ermöglicht.

Somit kann beispielsweise der Analog/Digital-Wandler In dem Sender im NF-Bereich von 20 Hz bis 20 (40) kHz mit einer Abtastrate Fs = 48/96 kHz betrieben werden, eine Audio-Vorverarbeitung, Pre-Emphase, ein "Rumpelfilter"; ein Kompressor/Encoder; eine Status/Kontrollsignalerzeugung (Pilotton, Statusinformationserzeugung und Kodierung), eine Kombination von Audiosignalen und Kontrollsignalen, ein Kanalfilter (Pre-Emphase) sowie ein Modulator und optional eine erste Zwischenfrequenz ZF implementiert. In dem Empfänger wird ein hochabtastender AD-Wandler/Komperator (mit einer Abtastrate Fs von einigen hundert Kilohertz bis einigen Megahertz), ein Demodulator, ein Kanalfilter, eine Extraktion von Status-/Kontrollsignalen, ein Expander/Decoder, eine Audio-Nachverarbeitung und ein Digital/Analog-Wandler mit einer Abtastrate von Fs = 48/96 kHz implementiert.

Nachfolgend wird eine Implementierungsmöglichkeit eines in Figur 2 gezeigten Empfängers aufgezeigt, wobei bereits der Demodulator im Empfänger digital realisiert wird, was den wesentlichen Vorteil erhöhter Linearität der Demodulation, sowie die Ersparnis von RSSI, Limiter und des zweiten Mischers mit sich bringt, Statt eines relativ komplexen Demodulator-ICs ist also nur noch ein einfacher Mischer zur Umsetzung von der ersten auf die zweite Zwischenfrequenz ZF nötig. Außerdem ist eine Reduzierung der Selektionsanforderungen der SAW-Filter möglich, die dadurch mit geringerem Klirrfaktor realisiert werden können.

Beim konventionellen Ansatz beispielsweise für ein Hybrid-Mikrofon wird in der zweiten Zwischenfrequenz (meist 10.7 MHz) nochmals mit keramischen Filtern die Selektion erhöht und anschließend demoduliert. Ein AD-Wandler (Analog/Digital-Wandler) tastet das vorliegende analoge Audio-Signal ab, um den Expanderalgorithmus auf die nun digitale Datenfolge anzuwenden. Setzt man den AD-Wandler aber schon in die zwischenfrequenz ZF, dann kann durch geschickte Wahl der Abtastrate bereits durch den Abtastprozess selbst ein Heruntermischen und sogar eine perfekte Quadraturdemodulation erzielt werden, Die Abtastrate des Wandlers muss dabei nicht der Höhe der ZF, sondern allein der Basisband-Bandbreite angepasst werden, was zum sonst eingesetzten Audio-Wandler ungefähr einen Faktor von 5...10 ausmacht (480 kHz/96 kHz ...480 kHz/48 kHz), Zusätzlich ergeben sich allerdings zwei weitere Anforderungen. Zum einen muss die Abtastrate - wie bereits angedeutet - im bestimmten Verhältnis zur ZF stehen und zum anderen muss die analoge Eingangsbandbreite (Güte des Abtast-Halte-Gliedes) der Zwischenfrequenz genügen.

**EP 1 813 026 B1**

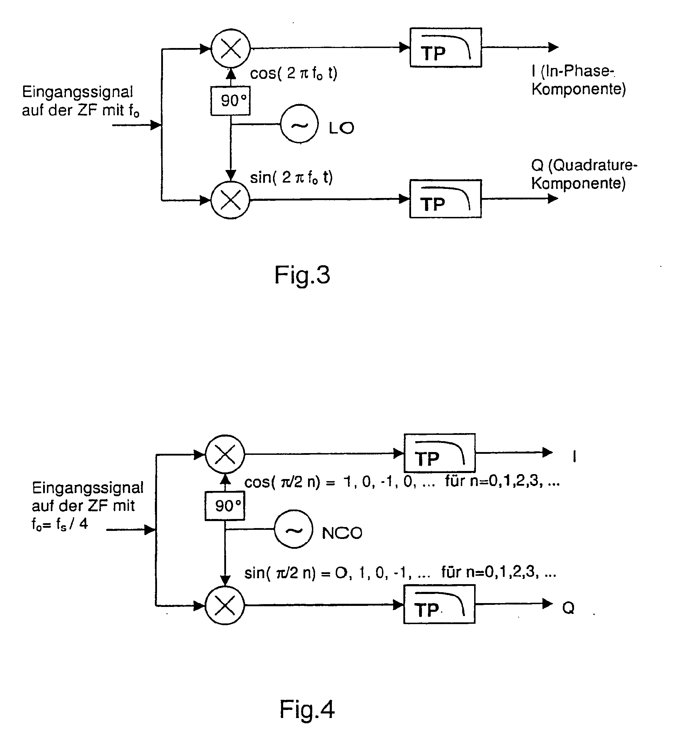

Figur 3 zeigt ein Blockdiagramm eines herkömmlichen analogen Quadraturdemodulators. Das Eingangssignal auf der Zwischenfrequenz ZF wird den beiden Mischern zugeführt und mit dem Oszillatorsignal des LOs (Local Oscillator) gemischt. Die folgenden Tiefpass-Filter TP unterdrücken jeweils das Summen-Mischprodukt, so dass nur das Basisband (Mittenfrequenz=0) für I und Q am Ausgang anliegt. Danach erfolgt die FM-Demodulation aus dem komplexen Signal I+j*Q.

Da die analoge Umsetzung dieser Anordnung aus Figur 3 keine einfache Alternative zur bisherigen FM-Demodulation darstellt, wird der AD-Wandler schon in den Bereich der Zwischenfrequenz gesetzt Die Mischer werden jetzt zu digitalen Multiplizierern und die beiden LO-Signale zum numerischen Kosinus- und Sinus-Datenstrom. Aus

$\cos(2\pi f_0 t)$ wird demnach $\cos(2\pi \frac{f_0}{f_s} n)$ und

$\sin(2\pi f_0 t)$ wird zu $\sin(2\pi \frac{f_0}{f_s} n)$ mit jeweils t = $nT_\delta$ und $T_s = \frac{1}{f_s}$.

Wählt man nun das Verhältnis $\frac{f_0}{f_s}$ mit

$$f_s = \frac{4}{k} f_0, \qquad (1)$$

so ergeben sich für Kosinus- und Sinusfunktion nur die Funktionswerte {1, 0, -1, 0,...} bzw. {0, 1. 0, -1.... }.

Figur 4 zeigt ein Blockdiagramm des digitalen Quadraturdemodulators für den Fall k = 1, also $f_s = 4f_0$.

Es ist somit ersichtlich, dass In beiden Pfaden nur jeder zweite Abtastwert signifikant ist und dass der jeweils orthogonale Anteil zu Null wird. Um die gesamte Quadraturdemodulation zu realisieren, müssen also nur Nullen eingefügt und an gegebener Stelle Vorzeichen invertiert werden; d. h. auf einen numerischen Oszillator (NCO) und Multiplizierer kann vollständig verzichtet werden. Durch die Phasenverschiebung von 90°, die hier genau einen Abtastwert ausmacht, kann der digitale Datenstrom des AD-Wandlers sogar gleich als gemultiplext aus I- und Q-Werten interpretiert werden, denen man nur noch eine Null für den jeweils orthogonalen Signalanteil zuordnen muss:

$I_0, Q_1, -I_2, -Q_3, I_4, Q_s, -I_6, -Q_7, I_8, Q_9, -Q_{11}, I_{12}, Q_{13}, -I_{14}, -Q_{15}$

Dabei ist es völlig unerheblich, ob die Zählweise bei einem I oder Q beginnt, weil die im Fehlerfall resultierende Seitenbandumkehr bei einer Modulation, wie beispielsweise eine FM-Modulation, nur zu einer konstanten Phasenverschiebung führt. Auch der Start der Vorzeichenmanipulation ist unkritisch, weil damit nur die Phasenlage des LOs um 180° verschoben wird, was wiederum keinen Einfluss auf die Demodulation eines FM-Signals hat.

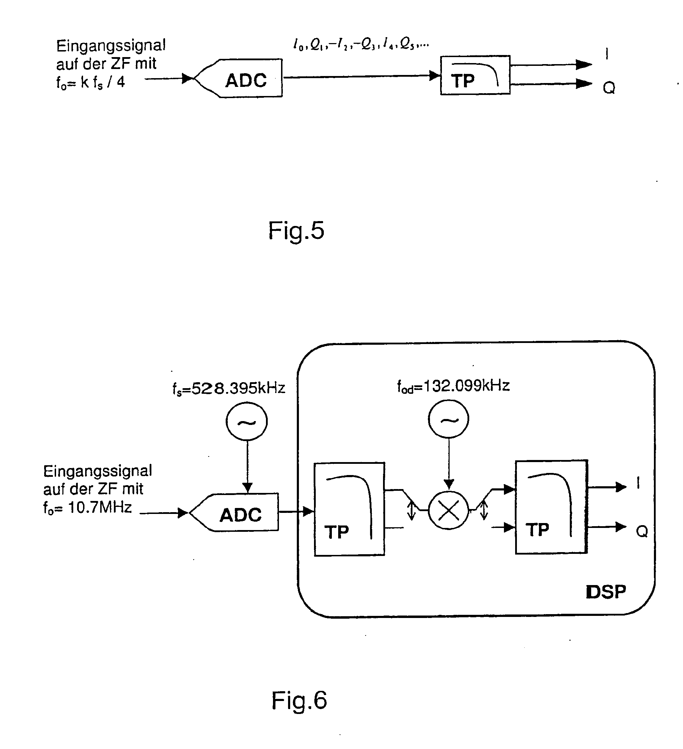

Der Vorzeichenwechsel kann sehr einfach durch Negation der entsprechenden Koeffizienten des folgenden Tiefpasses, oder durch abwechselnde Vorzeichenumkehr am Akkumulator des Filters erreicht werden. Da I- und Q-Werte niemals gleichzeitig ungleich Null sind, kann dies sogar mit nur einem einzigen Filter implementiert werden, das zwei getrennte Akkumulatoren hat. die alternierend benutzt werden wie in Figur 5 gezeigt. Nach diesem Filter wird die Abtastrate auf das notwendige Maß dezimiert, um die Komplexität der nötigen Folgestufen zu reduzieren.

Für den eben gewählten Spezialfall von k = 1, bzw. $f_s = 4 f_0$ beträgt die erforderliche Abtastrate entsprechend der aktuellen Zwischenfrequenz ZF von 10.7 MHz genau 42.8 MHz. Ein AD-Wandler dieser Taktrate ist in der Regel weder besonders günstig, noch gibt er sich mit wenig Strom zufrieden, was je nach Applikation (z.B. bei Batteriebetrieb) ein wichtiges Kriterium darstellt. Noch ungünstiger ist allerdings, dass diese Taktrate selbst für heutige DSPs eine sehr hohe Auslastung darstellt, die kaum weitere Verarbeitung erlaubt. Wie oben angekündigt, ist eine solch hohe Abtastrate allerdings nicht notwendig, denn das Abtasttheorem muss nicht für die Zwischenfrequenz 2F, sondern ausschließlich für die Nutzbandbreite erfüllt werden. Da dies in der Anordnung noch vor dem Demodulator erfolgt, handelt es sich bei dieser Nutzbandbreite um die der Modulation (und nicht des demodulierten Audio-Signals!). k kann solange erhöht werden, wie die resultierende Abtastrate der Bedingung

$$f_s \geq 2B_{BB}, \text{ mit } B_{BB} \text{ als einseitiger Basisband-Bandbreite, gerecht wird.} \qquad (2)$$

5

$f_s$ sollte vorzugsweise ein wenig höher gewählt werden, damit die Basisbandfilterung keinen übermäßig hohen Aufwand erfordert (Anzahl nötiger Multiplikationen im DSP), Bei der durch die entsprechend geringe Abtastrate realisierten Unterabtastung wird das auftretende Aliasing ganz gezielt genutzt. Wenn die Abtastrate im ganzzahligen Verhältnis zur Zwischenfrequenz ZF eingestellt wird, so wird das der ZF aufmodulierte Signal direkt beim Abtastprozess in die Nulllage gemischt Die zu erfüllende Beziehung lautet also

$$f_s = \frac{f_0}{m} \text{ mit } m \in G, G \text{ ist Bereich der ganzen Zahlen.} \tag{3}$$

Bei der Unterabtastung werden die Anteile aller ganzzahligen Vielfachen der Abtastfrequenz in das Basisband gefaltet, so dass eine Selektion des einzig interessierenden Alias-Images um 10.7 MHz erfolgen muss. Dies geschieht bereits durch die vorhergehenden ZF-Filter, die nur den Bereich um 10.7 MHz ungedämpft passieren lassen, Vorzugsweise solite der AD-Wandler keine eingebauten Anti-Aliasing-Filter haben, sondern muss undersampling-fähig sein. Die analoge Eingangsbandbreite ist in solchen Fällen vielfach höher als die mögliche Abtastrate und hängt von der Güte des Sample-and-Hold-Gliedes ab (wichtende Sinc-Funktion Im Spektrum). Außerdem entscheidet die Abtastunsicherheit (Aperture Jitter) über die nutzbare Dynamik bei hochfrequenten Eingangssignalen. Die Begrenzung des Signal-Rausch-Abstandes (SNR) lässt sich wie folgt berechnen:

$$SNR_{dB} = 20\log_{10}\left(\frac{1}{2\pi f_{in} t_j}\right), \; t_j \text{ ist dabei der quadratische Mittelwert des}$$

Taktjitters. $\tag{4}$

Wenn das empfangene modulierte Signal wie beispielsweise das FM-Signal aufwandsoptimiert durch Unterabtastung von der Zwischenfrequenz gewonnen werden soll und gleichzeitig eine Quadraturdemodulation ohne NCO und Multiplizierer realisiert werden soll, ergibt sich aus den Gleichungen (1), (2) und (3) folgende Anforderung:

$$\frac{k}{m} = 4 \text{ wobei } m \leq \frac{f_0}{2B_{BB}} \text{ sein muss mit } k = 1,3,5,... \text{ und } m \in G. \tag{5}$$

Unter den gegebenen Bedingungen ist keine Lösung vorhanden, weil ein ungerades $k$ dividiert durch 4 nie eine ganze Zahl $m$ ergeben kann. Eine perfekt orthogonale Quadraturdemodulation und eine mit der Abtastung einhergehende Abwärtsmischung auf 0 Hertz wird nicht gleichzeitig realisiert werden können, sondern immer nur eines von beiden.
Anstatt gleich auf $f = 0$ zu mischen, kann $k$ derart gewählt werden, dass sich das Nutzsignal durch die Unterabtastung auf eine zusätzliche, viel niedrigere Zwischenfrequenz im digitalen Bereich legt ($f_{od}$). Hierbei muss aber beachtet werden, dass das Abtasttheorem für beide Seitenbänder erfüllt sein muss. Für diesen Fall ergibt sich also als neue Anforderung

$$f_s \geq 4B_{BB} \text{ und weiterhin} \tag{6}$$

$$\frac{f_s}{2} \geq f_{od} \geq B_{BB}, \text{ mit } B_{BB} \text{ als einseitiger Basisband-Bandbreite.} \tag{7}$$

Für eine ZF von beispielsweise $f_0 = 10.7$ MHz ergeben sich mit $k = 81$ und $m = 20$ folgende Parameter:

$$f_s = 528.395 kHz$$

$$f_{od} = f_0 - mf_s = 132.099 kHz.$$

Fig. 6 zeigt ein Blockdiagram eines digitalen Quadraturmodulators. Hierbei ist ein AD-Wandler ADC in der Zwischenfrequenz vorgesehen und liefert den gemultiplexten I/Q-Datenstrom an eine digitale Signalverarberbeitungseinheit DSP, welche aufgrund der relativ geringen Datenrate genügend Zeit für die Signalverarbeitung hat. Ein Teil davon wird benötigt, um die I- und Q-Signale von der digitalen Zwischenfrequenz $f_{od}$ hinunter in Nulliage zu mischen. Hierbei entspricht die digitale Zwischenfrequenz $f_{od}$ dem Eingangssignal der Zwischenfrequenz minus m * der Abtastrate des AD-Wandlers ADC ($f_{od}=f_0 - mf_s$). Durch entsprechende Wahl der Parameter k, m kann sichergestellt werden, dass die Modulationsbandbreite maximal 100kHz (einseitig) (laut dem ETSI-Standard) beträgt. Dies kann durch Multiplikationen mit einem Kosinus der digitalen Zwischenfrequenz, oder aber effizient mit dem CORDIC-Algorithmus, der diese Aufgabe mit Bit-Shifts und Additionen umsetzt, erfolgen. Generell ist bei Unterabtastung aus geraden Nyquistzonen eine Seltenbandumkehr zu beachten, die hier bei der FM eine konstante Phasenverschiebung verursacht.

Der zweite Tiefpass kann sehr effizient als sogenanntes Halbbandfilter realisiert werden, wobei die Grenzfrequenz der halben Nyquistrate entspricht, wodurch Jeder zweite Koeffizient zu Null wird. Somit wird ein Multiplexen von 1 und Q unter Nutzung zweier Akkumulatoren ermöglicht. Ferner kann eine Dezimierung der Abtastrate erfolgen, da nur noch das Abtasttheorem für die einseitige Basisband-Bandbreite erfüllt werden muss, was im Folgenden eine komplexere Signalverarbeitung erlaubt. Hervorzuheben ist, dass trotz der Verarbeitung zweier Signalanteile (I und Q) es an keiner Stelle notwendig ist, mehr als $f_s$ Multiplikationen auszuführen.

Die beiden Tiefpass-Filter erhöhen die Kanalselektion, so dass die diesbezüglichen Anforderungen an die analogen ZF-Filter u.U. zu Gunsten eines geringeren Klirrfaktors reduziert werden können. Dabei ist jedoch zu beachten, dass die Dynamik des AD-Wandlers in der Zwischenfrequenz ZF eine lineare Umsetzung von Nutz- und Störsignalen erlauben muss. Eine Desensibilisierung durch eine ggf. vorgeschaltete automatische Verstärkungsregelung (automatic gain control) AGC kann nicht wieder rückgängig gemacht werden. Das bedeutet, dass jedes dB geringere Selektion ein dB mehr an AD-Wandler-Dynamik erfordert Will man aus Kostengründen keine hinsichtlich Phasenlinearität optimierten ZF-Filter einsetzen (custom parts), kann man wie bisher einen analogen Limiter vor dem AD-Wandler einsetzen, der die Dynamikanforderungen stark reduziert, so dass völlig ohne AGC und mit einem einfacheren Wandler gearbeitet werden kann. Gegebenenfalls kann die Abtastung sogar mit nur einem Bit Auflösung erfolgen, d. h. mit einem Komparator realisiert werden.

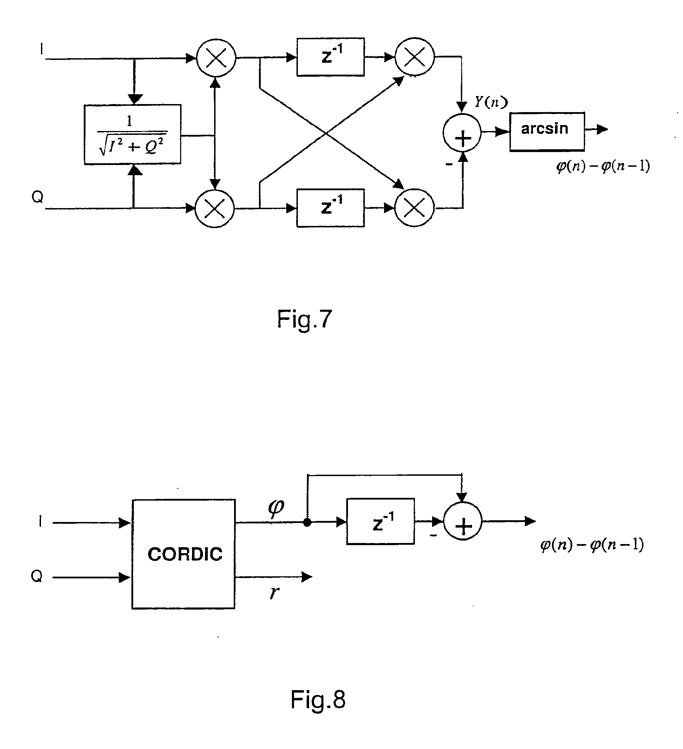

Der wesentliche Vorteil einer digitalen FM-Demodulation verglichen mit einer analogen Ist die viel höhere Linearität verbunden mit der Abgleichfreiheit sowie die fehlende Alterung. Der Klirrfaktor eines solchen Demodulators ist also wesentlich geringer und die Dynamik wird nur durch die Wortbreite der Signalverarbeitung bestimmt. Sofern nicht vor dem AD-Wandler ein analoger Limiter wie bei herkömmlichen Lösungen die AM-Unterdrückung vorgenommen hat, wird sie nun durch Division mit dem Betrag gemäß Figur 7 realisiert. Das nachfolgende Multiplikationsnetzwerk bildet das Ausgangssignal

$$Y(n) = Q(n)I(n-1) - I(n)Q(n-1) = \sin(\varphi(n) - \varphi(n-1)). \qquad (8)$$

Nach der Umkehrung der Sinus-Funktion liegt also die Phasendifferenz pro Zeiteinheit vor, die der aktuellen Modulationsfrequenz entspricht:

$$f_m = \frac{\varphi(n) - \varphi(n-1)}{T_s} \text{ mit } T_s = \frac{1}{f_s}. \qquad (9)$$

Noch einfacher im Digitalen zu implementieren Ist die Umrechnung der kartesischen Koordinaten (I, Q) in polare ($r$, $\varphi$) mit Hilfe des CORDIC-Algorithmus' (verwendet nur Bit-Shifts und Additionen), um aus den Phasenwerten $\varphi$ durch einfache Subtraktion die momentane Modulationsfrequenz zu bestimmen. Die AM-Unterdrückung wird quasi durch Ignorieren des Amplitudenwertes $r$ gemäß Figur 8 erreicht.

In einem Hybrid-Mikrofon folgt nun im DSP neben der Herleitung diverser Squelch-Kriterien (Rauschleistung, Pilotton), der Filterung und Auswertung des Batterietelegrammes direkt die Umkehrung einer eventuell vorgenommenen Pre-Emphase und natürlich der Expander.

Der in einem Hybrid-Mikrofon-Empfänger eingesetzte DSP für die Expandierung kann ebenfalls für eine aufwandsoptimierte Verarbeitung der Zwischenfrequenz und voll digital implementierte FM-Demodulation genutzt werden. Letztere bringt gegenüber einer analogen Umsetzung eine wesentlich erhöhte Linearität und völlige Abgleichfreiheit mit sich.

Obwohl die Prinzipien der Erfindung oben für eine FM-Modulation und eine FM Demodulation beschrieben worden sind, lassen sich die Prinzipien der Erfindung auch auf andere Modulationen/Demodulationen anwenden.

Die oben angeführten Zahlenbeispiele dienen lediglich der Veranschaulichung der grundliegenden Arbeitsweise der Erfindung, Die Arbeitsweise der Erfindung lässt sich ebenfalls mit anderen Zahlenbeispielen realisieren.

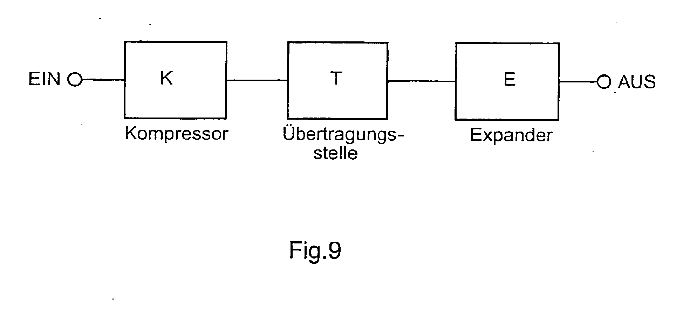

Figur 9 zeigt ein schematisches Blockdiagramm eines drahtlosen digitalen Audio-Übertragungssystems gemäß der Erfindung. Die zu übertragene Eingangssignale IN werden der Kompressor-Einheit K zugeführt, welche die Eingangssignale IN komprimiert, die dann über die Übertragungsstrecke T übertragen werden. Eine Expandereinheit E empfängt die übertragenen komprimierten Signale und führt eine Expansion der Signale durch und gibt die Signale dann als Ausgangssignal OUT aus. Die Übertragungsstrecke stellt vorzugsweise eine drahtlose Übertragungsstrecke dar.

Der digitale Kompander gemäß dem ersten Ausführungsbeispiel besteht aus einer Kompressor-Einheit K in einem Sender und einer reziprok arbeitenden Expander-Einheit E in einem Empfänger. Der digitale Kompander gemäß dem ersten Ausführungsbeispiel ist als ein Multiband-Kompander implementiert, d. h. ein Eingangssignal wird in verschiedene Bänder aufgeteilt,

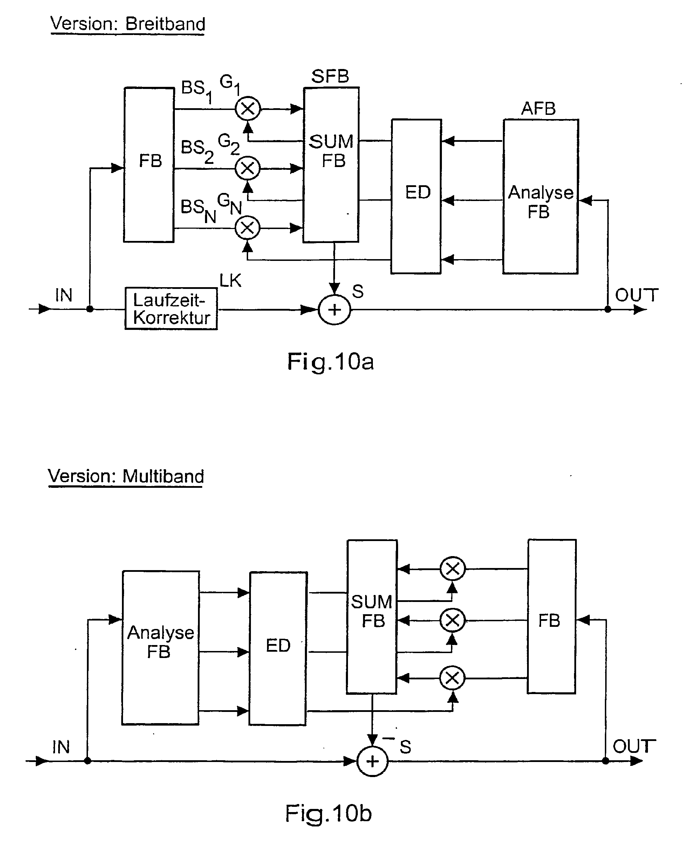

Figur 10a zeigt ein Blockschaltbild eines Kompressors gemäß dem ersten Ausführungsbeispiel. Der Kompressor weist eine Filterbank FB mit einer Vielzahl von Ausgängen $BS_1$ - $BS_N$, eine Vielzahl von Multipliziereinheiten $G_1$ - $G_N$, eine Summenfilterbank SFB, eine Einhüllenden-Detektionseinheit ED, eine Filterbank-Analyseeinheit AFB, eine Laufzeit-Korrektureinheit LK und eine Summiereinheit S auf. Ein zu übertragendes Signal IN wird sowohl der Laufzeit-Korrektureinheit LK als auch der Filterbank FB zugeführt. In der Filterbank FB wird das Eingangssignal IN in unterschiedliche Frequenzbänder eingeteilt. Die jeweiligen Ausgänge der Filterbank $BS_1$ - $BS_N$ stellen reelle oder komplexe Signale, d. h. bestehend aus Real- und Imaginärtell, dar. Die Ausgänge der Filterbank $BS_1$ - $BS_N$ werden den Multipliziereinheiten $G_1$ - $G_N$ jeweils zugeführt, um sie mit bandspezifischen reell-wertigen Gewichtungsfaktoren zu multiplizieren. Die Ausgangssignale der Multipliziereinheiten $G_1$ - $G_N$ werden jeweils der Summen-Filterbank SFB zugeführt, wo die jeweils in ihrem Betrag geänderten komplexen Bandsignale zu einem Gesamtsignal zusammengeführt werden. Dieses zusammengeführte Signal wird in der Summiereinheit S zu dem Eingangssignal IN hinzuaddiert. Vorzugsweise wird dieses Eingangssignal IN einer Laufzeltkorrektur in der Laufzeit-Korrektureinheit LK unterzogen. Die Laufzeitkorrektur wird dabei derart ausgewählt, dass die Laufzeiten ausgeglichen werden, welche durch die Verarbeitung des Eingangssignals IN in der Filterbank FB, den Multipliziereinheiten $G_1$ - $G_N$ sowie der Summenfilterbank SFB entstanden sind.

Das Resultat der Addition des modifizierten Signals zu dem laufzeitkorrigierten Eingangssignal IN stellt eine Kompression der Signaldynamik dar, so dass das Ausgangssignal OUT eine Dynamikkompression erfahren hat.

Zusätzlich zu der oben beschriebenen Implementierung wird eine Rückkopplungsschleife realisiert. Dazu wird das Ausgangssignal OUT einer Filterbank-Analyseeinheit AFB zugeführt. Die Ausgangssignale der Filterbank-Analyseeinheit AFB stellen reell- oder komplexwertige Funktionen dar und werden an die Einhüllenden-Detektionseinheit ED weitergeleitet. In der Einhüllenden-Detektionseinheit ED erfolgt eine Schätzung der Einhüllenden des Signals, so dass die Ausgangssignale der Einhüllenden-Detektionseinheit ED die Gewichtsfunktionen ermittelt werden können, welche eine Kennlinie mit Kompressionseigenschaften beschreibt. Die ermittelten Gewichtsfunktionen werden in den Multipliziereinheiten $G_1$ - $G_N$ zugeführt und somit mit den Ausgangssignalen $BS_1$ - $BS_N$ multipliziert. Die Einhüllenden-Detektiongseinheit ED dient ebenfalls dazu, zeitliche Regeleigenschaften, wie beispielsweise Attack, Decay, Sustain, Release oder dergleichen den Gewichtsfunktionen aufzuprägen.

Figur 10b zeigt ein Blockdiagramm eines Expanders gemäß dem ersten Ausführungsbeispiel. Hierbei ist der Expander im Wesentlichen reziprok zu dem Kompressor aus Figur 10a aufgebaut, Lediglich eine Laufzeitkorrektureinheit LK kann entfallen. Hier stellt das Eingangssignal IN das Ober die Übertragungsstrecke von Figur 9 übertragene Signal dar. Während in dem Kompressor von Figur 10a die Filterbank FB, die Multipliziereinheiten $G_1$ - $G_N$ sowie die Summen-Filterbank SFB in einer Vorwärtsstruktur vorgesehen sind, sind diese Einheiten in dem Expander von Figur 10b in dem Rückkopplungspfad angeordnet, so dass das Ausgangssignal der Summen-Filterbank SFB in der Summiereinheit S von dem Eingangssignal IN abgezogen wird, um das Ausgangssignal OUT darzustellen. Die Funktion der Filterbank-Analyseeinheit AFB und der Einhüllenden-Detektionseinheit ED entspricht dabei der Funktion dieser Einheiten in dem Kompressor von Figur 10a.

Während der digitale Kompander gemäß dem zweiten Ausführungsbeispiel der Erfindung auf einer Multibandimplementierung beruht, beruht der digitale Kompander gemäß dem dritten Ausführungsbeispiel der Erfindung auf einem digitalen Kompander mit einem kontinuierlichen Band.

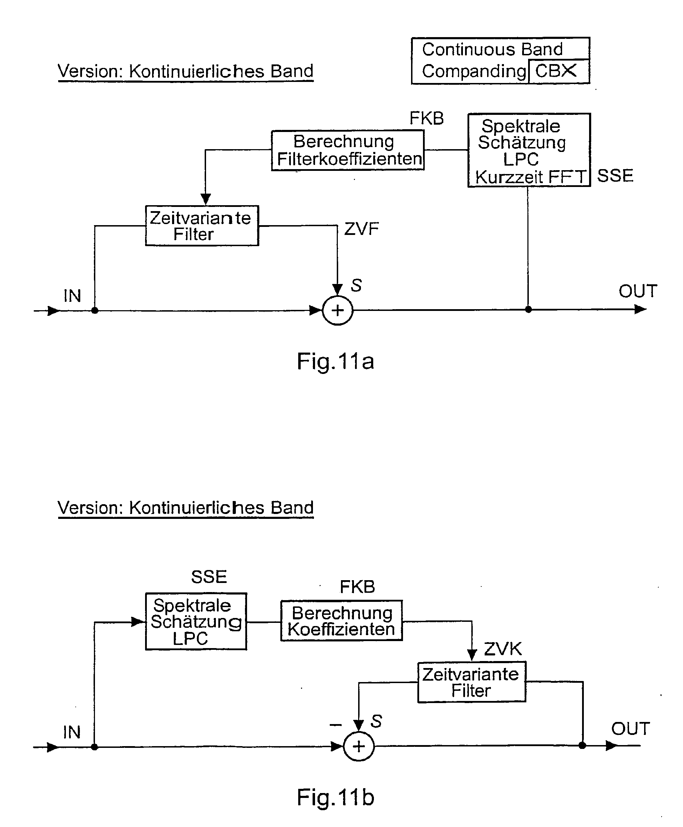

Figur 11a zeigt ein Blockdiagramm eines Kompressors gemäß dem zweiten Ausführungsbeispiel der Erfindung. Der Kompressor weist dabei eine zeitvariante Filtereinheit ZVF, eine Filterkoefizienten-Berechnungseinheit FKB und eine spektrale Schätzungseinheit SSE auf. Das zu übertragende Eingangssignal IN wird sowohl der Summiereinheit S als auch der zeitvarianten Filtereinheit ZVF zugeführt. Die zeitvariante Filtereinheit ZVF bewirkt eine zeitvariante Filterung, so dass ein kontinuierliches Band entsteht. Das Ausgangssignal der Filtereinheit ZVF wird zu dem Ausgangssignal IN in der Summiereinheit S hinzuaddiert, so dass das Ausgangssignal OUT entsteht. Das Ausgangssignal OUT wird der spektralen Schätzungseinheit SSE zugeführt, welche eine spektrale Schätzung durchführt, Eine derartige Schätzung kann beispielsweise durch einen LPC-Filter oder eine Kurzzeit-FFT erfolgen. Das Ausgangssignal der Schätzungseinheit SSE wird der Filterkoeffizienten-Berechnungseinheit FKB zugeführt. Hier erfolgt dann die Berechnung der Koeffizienten für den zeitvarianten Filter ZVF basierend auf der spektralen Schätzung. dem Kompressionsfaktor und ggf. weiteren zeitlichen Parametern wie beispielsweise Attack, Decay, Sustain und Release. Die somit ermittelten aktuellen Filterkoeffizienten, welche die gewünschten Kompressionskennlinie darstellen, werden dem zeitvarianten Filter ZVF zugeführt, um das Eingangssignal IN entsprechend zu beeinflussen. Somit kann die Dynamik des Ausgangssignals OUT durch Beeinflussung der Filterkoeffizienten in seiner Dynamik entsprechend komprimiert werden.

Figur 11b zeigt ein Blockdiagramm eines Expanders gemäß einem zweiten Ausführungsbeispiel der Erfindung. Der Expander ist dabei im Wesentlichen komplementär bzw. reziprok zu dem Kompressor von Figur 11a aufgebaut. Somit weist der Expander ebenfalls eine spektrale Schätzungseinheit SSE, eine Filterkoeffizienten-Berechnungseinheit sowie eine zeitvariante Filtereinheit ZVF und eine Summiereinheit S auf. Hierbei wird das übertragene Eingangssignal IN sowohl an die Summiereinheit S als auch an die spektrale Schätzungseinheit SSE weitergeleitet. Das Ausgangssignal der spektralen Schätzungseinheit SSE wird der Filterkoeffizienten-Berechnungseinheit FKB zugeführt, welche die entsprechenden Filterkoeffizienten berechnet und der zeitvarianten Filtereinheit zuführt. Das Ausgangssignal OUT wird der zeitvarianten Filtereinheit ZVF zugeführt, so dass das Ausgangssignal der Filtereinheit ZVF in der Summiereinheit S von dem Eingangssignal abgezogen wird. Somit sind wie in dem ersten Ausführungsbeispiel die Vorwärts- und Rückwärtsstrukturen zwischen dem Kompander und dem Expander umgekehrt ausgestaltet.

Der digitale Kompander gemäß dem ersten Ausführungsbeispiel ähnelt dem digitalen Kompander gemäß dem zweiten Ausführungsbeispiel, da bei Erhöhung der Anzahl der Bänder in dem Multiband-Kompander gemäß dem ersten Ausführungsbeispiel in einen digitalen Kompander mit einem kontinuierlichen Band gemäß dem zweiten Ausführungsbeispiel übergeht. Der Kompander gemäß dem ersten Ausführungsbeispiel unterscheidet sich von dem Kompander gemäß dem zweiten Ausführungsbeispiel darin, dass die entsprechenden Regelgrößen unterschiedlich ermittelt werden und ebenfalls in einer entsprechenden Übertragung auf die frequenzbestimmten Koeffizienten des zeitvarianten Filters.

Wie bereits oben angeführt besteht der digitale Kompander aus einer Kompressoreinheit in einem Sender und einer reziprok bzw. komplementär arbeitenden Expandereinheit in einem Empfänger. Eine digitale Implementierung eines Kompanders garantiert die im Wesentlichen vollständige Identität der Signalanaylse-Einheiten wie beispielsweise Wichtungsfilter, Filterbänke. Einhüllenden-Bestimmung sowie der Zeitkonstanten des Encoders bzw. des Kompanders und Decoders bzw, des Expanders. Somit sind die Audiofunktionen der Übertragung nicht mehr abhängig von ggf. vorhandenen Bauteiltoleranzen oder Alterungserscheinungen der entsprechenden Bauteile. Eine digitale Implementierung eines Kompanders mit Hilfe einer digitalen Signalverarbeitungseinheit DSP erlaubt ferner eine vereinfachte Implementierung von Kurzzeit-Frequenzanalyseverfahren wie beispielsweise Fourier-Transformation und eine LPC-Analyse und eine entsprechend einfache Realisierung von nichtlinearen Funktionalitäten.

Gemäß einem weiteren Ausführungsbeispiel der Erfindung ist die Filterbank-Analyseeinheit AFB bzw. die spektrale Schätzungseinheit SSE in der Lage, in Abhängigkeit von dem detektierten Eingangssignal IN die Kompandereigenschaften einzustellen. Alternativ dazu kann die Konfiguration des digitalen Kompanders entsprechend manuell vorgenommen werden. Hierzu können die Kompandereigenschaften programmiert werden und über Presets bzw. vorab ausgewählte Einstellungen ausgewählt werden. Somit wird eine Kompatibilität zwischen Sendern und Empfängern mit unterschiedlichen digitalen Kompandersystemen erhalten.

Während bei bekannten analogen Kompandem der Kompander basierend auf einer Einband- oder Multibandtechnologie realisiert wurden, hat die Einbandtechnologie den Nachteil, dass das gesamte Band bzw. sein Pegel durch schmalbandige Signale geregelt wird. Dies führt zu hörbaren Rauschfahnen und zur unerwünschten Modulation von Hochfrequenz-informationen auf tieffrequente Signalanteile oder umgekehrt. Die Multibandtechnologie hingegen löst dieses Problem, hat aber einen deutlich höheren Realisierungs- und Abgleichaufwand in ihrer analogen Implementierung. Des Weiteren sind die zeitlichen Parameter sowie die Art und Weise der Einhüllenden-Schätzung fest durch die analoge Schaltungstechnik vorgegeben. Ferner ist das Kompressionsverhältnis im Band fest eing$^g$stellt, In einer digitalen Im-plementierung können diese Parameter hingegen variieren, so dass eine Analyse des Signalinhaltes die zeitlichen Parameter und die Art der Einhüllenden-Bildung sowie das Kompressionsverhältnis steuern kann.

Der Kompressor und Expander gemäß dem ersten und zweiten Ausführungsbeispiel lassen sich jeweils als Kompressor/Encodermittel KEM und Expander/Decodermittel EDM gemäß Fig. 1 verwenden.

Eine gemäß dem ersten und zweiten Ausführungsbeispiel beschriebene Kompression und Expandierung lassen sich überall dort einsetzen, wo ein Kompander verwendet werden kann.

**EP 1 813 026 B1**

**Patentansprüche**

1. Digitaler Kompressor für eine digitalen Kompandervorrichtung, mit
einer Filterbank (FB) zum Einteilen eines Eingangssignals (In) in unterschiedliche Frequenzbänder (BS1 - BSN),
mindestens eine Multipliziereinheit (G1 -GN) zum Multiplizieren der unterschiedlichen Frequenzbänder (BS1 - BSN) des Eingangssignals (IN) mit Gewichtungsfaktoren (G1 - GN),
einer Summenfilterbank (SFB) zum Zusammenführen der Ausgangssignale der Multiplikationseinheiten (G1 - GN) zu einem Filterbank-Gesamtsignal,
einer Additionseinheit (S) zum Addieren des Eingangssignals (In) zu dem Filterbank-Gesamtsignal, um ein Ausgangssignal (OUT) zu erhalten,
einer Filterbank-Analyseeinheit (AFB) zum Analysieren des Ausgangssignals (OUT), und
einer Einhüllenden-Detektionseinheit (ED) zum Schätzen der Einhüllenden des Ausgangssignals (OUT) basierend auf der Analyse des Ausgangssignals (OUT) durch die Filterbank-Analyseeinheit (AFB), um die Gewichtungsfaktoren (G1 - GN) zu bestimmen.

2. Digitaler Expander für eine digitale Kompandervorrichtung, mit
einer Filterbank (FB) zum Einteilen eines Ausgangssignals (OUT) in unterschiedliche Frequenzbänder (BS1 - BSN),
mindestens eine Multipliziereinheit (G1 -GN) zum Multiplizieren der unterschiedilchen Frequenzbänder (BS1 - BSN) des Ausgangssignals (OUT) mit Gewichtungsfaktoren (G1 - GN),
einer Summenfilterbank (SFB) zum Zusammenführen der Ausgangssignale der Multiplikationseinheiten (G1 - GN) zu einem Filterbank-Gesamtsignal,
einer Additionseinheit (S) zum Subtrahieren des Filterbank-Gesamtsignal Ausgangssignals von dem Eingangssignal (In) zu, um ein Ausgangssignal (OUT) zu erhalten,
einer Filterbank-Analyseeinheit (AFB) zum Analysieren des Eingangssignals (In), und
einer Einhüllenden-Detektionseinheit (ED) zum Schätzen der Einhüllenden des Eingangssignals (In) basierend auf der Analyse des Eingangssignals (In) durch die Filterbank-Analyseeinheit (AFB), um die Gewichtungsfaktoren (G1 - GN) zu bestimmen.

3. Digitaler Kompressor für eine digitalen Kompandervorrichtung, mit
einer zeitvarianten Filtereinheit (ZVF) zur zeitvarianten Filterung eines Eingangssignals (IN),
einer Additionseinheit (S) zum Addieren des Ausgangssignals der zeitvarianten Filtereinheit (ZVF) zu den Eingangssignal (IN), um ein Ausgangssignal (OUT) zu erhalten,
einer spektralen Schätzungseinheit (SSE) zum Durchführen einer spektralen Schätzung des Ausgangssignals (OUT), und
einer Filterkoeffizienten-Berechnungseinheit (FKB) zum Berechnen der Koeffizienten der zeitvarianten Filtereinheit (ZVF) basierend auf der spektralen Schätzung der spektralen Schätzungseinheit (SSE),

4. Digitaler Expander für eine digitalen Kompandervorrichtung, mit
einer zeitvarianten Filtereinheit (ZVF) zur zeitvarianten Filterung eines Ausgangssignals (OUT),
einer Additionseinheit (S) zum Subtrahieren des Ausgangssignals der zeitvarianten Filtereinheit (ZVF) von dem Eingangssignal (IN), um ein Ausgangssignal (OUT) zu erhalten;
einer spektralen Schätzungseinheit (SSE) zum Durchführen einer spektralen Schätzung des Eingangssignals (IN), und
einer Filterkoeffizienten-Berechnungseinheit (FKB) zum Berechnen der Koeffizienten der zeitvarianten Filtereinheit (ZVF) basierend auf der spektralen Schätzung der spektralen Schätzungseinheit (SSE).

**Claims**

1. A digital compressor for a digital compander apparatus, comprising
a filter bank (FB) for dividing an input signal (In) into different frequency bands (BS1 - BSN),
at least one multiplier unit (G1 - GN) for multiplying the different frequency bands (BS1 - BSN) of the input signal (IN) by weighting factors (G1 - GN),
a sum filter bank (SFB) for combining the output signals of the multiplication units (G1 - GN) to form a filter bank total signal,
an addition unit (S) for adding the input signal (In) to the filter bank total signal to obtain an output signal (OUT),
a filter bank analysis unit (AFB) for analysing the output signal (OUT), and
an envelope detection unit (ED) for estimating the envelope of the output signal (OUT), based on the analysis of the output signal (OUT) by the filter bank analysis unit (AFB), to determine the weighting factors (G1- GN).

2. A digital expander for a digital compander apparatus, comprising
a filter bank (FB) for dividing an output signal (OUT) into different frequency bands (BS1 - BSN),
at least one multiplier unit (G1 - GN) for multiplying the different frequency bands (BS1 - BSN) of the output signal (OUT) by weighting factors (G1 - GN),
a sum filter band (SFB) for combining the output signals of the multiplication units (G1 - GN) to form a filter bank total signal,
an addition unit (S) for subtracting the filter bank total signal output signal from the input signal (In) to obtain an output signal (OUT),
a filter bank analysis unit (AFB) for analysing the input signal (In), and
an envelope detection unit (ED) for estimating the envelope of the input signal (In), based on the analysis of the input signal (In) by the filter bank analysis unit (AFB), to determine the weighting factors (G1 - GN).

3. A digital compressor for a digital compander apparatus, comprising
a time-variant filter unit (ZVF) for time-variant filtering of an input signal (IN),
an addition unit (S) for adding the output signal of the time-variant filter unit (ZVF) to the input signal (IN) to obtain an output signal (OUT),
a spectral estimation unit (SSE) for carrying out a spectral estimation of the output signal (OUT), and
a filter coefficient calculating unit (FKB) for calculating the coefficients of the time-variant filter unit(ZVF) based on the spectral estimation of the spectral estimation unit (SSE).

4. A digital expander for a digital compander apparatus, comprising
a time-variant filter unit (ZVF) for time-variant filtering of an output signal (OUT),
an addition unit (S) for subtracting the output signal of the time-variant filter unit (ZVF) from the input signal (IN) to obtain an output signal (OUT);
a spectral estimation unit (SSE) for carrying out a spectral estimation of the input signal (IN), and
a filter coefficient calculating unit (FKB) for Calculating the Coefficients of the time-variant filter unit (ZVF) based on the spectral estimation of the spectral estimation unit (SSE).

**Revendications**

1. Compresseur numérique pour un dispositif compresseur-expanseur numérique, doté
d'un banc de filtres (FB) servant à répartir un signal d'entrée (IN) dans différentes bandes de fréquence (BS1 - BSN),
d'au moins un multiplicateur (G1 - GN) servant à multiplier les différentes bandes de fréquence (BS1 - BSN) du signal d'entrée (IN) par des facteurs de pondération (G1 - GN),
d'un banc de filtres de sommation (SFB) servant à regrouper les signaux de sortie des multiplicateurs (G1 - GN) en un signal global de banc de filtres,
d'une unité d'addition (S) servant à additionner le signal d'entrée (IN) au signal global de banc de filtres afin d'obtenir un signal de sortie (OUT),
d'une unité d'analyse de banc de filtres (AFB) servant à analyser le signal de sortie (OUT), et
d'une unité de détection d'enveloppante (ED) servant à estimer les enveloppantes du signal de sortie (OUT) sur la base de l'analyse du signal de sortie (OUT) par l'unité d'analyse de banc de filtres (AFB) afin de déterminer les facteurs de pondération (G1 - GN).

2. Expanseur numérique pour un dispositif compresseur-expanseur numérique, doté
d'un banc de filtres (FB) servant à répartir un signal de sortie (OUT) dans différentes bandes de fréquence (BS1 - BSN),
d'au moins un multiplicateur (G1 - GN) servant à multiplier les différentes bandes de fréquence (BS1 - BSN) du signal de sortie (OUT) par des facteurs de pondération (G1 - GN),
d'un banc de filtres de sommation (SFB) servant à regrouper les signaux de sortie du multiplicateur (G1 - GN) en un signal global de banc de filtres,
d'une unité d'addition (S) servant à soustraire le signal global de banc de filtres du signal de sortie au signal d'entrée (IN) afin d'obtenir un signal de sortie (OUT),
d'une unité d'analyse de banc de filtres (AFB) servant à analyser le signal d'entrée (IN), et
d'une unité de détection d'enveloppante (ED) servant à estimer les enveloppantes du signal d'entrée (IN) sur la base de l'analyse du signal d'entrée (IN) par l'unité d'analyse de banc de filtres (AFB) afin de déterminer les facteurs de pondération (G1 - GN).

3.  Compresseur numérique pour un dispositif compresseur-expanseur numérique, doté
    d'un boîtier de filtrage variant dans le temps (ZVF) servant au filtrage variant dans le temps d'un signal d'entrée (IN),
    d'une unité d'addition (S) servant à additionner le signal de sortie du boîtier de filtrage variant dans le temps (ZVF)
    au signal d'entrée (IN) afin d'obtenir un signal de sortie (OUT),
    une unité d'estimation spectrale (SSE) servant à effectuer une estimation spectrale du signal de sortie (OUT), et
    d'une unité de calcul de coefficients de filtre (FKB) servant à calculer les coefficients du boîtier de filtrage variant
    dans le temps (ZVF) sur la base de l'estimation spectrale de l'unité d'estimation spectrale (SSE),

4.  Expanseur numérique pour un dispositif compresseur-expanseur numérique, doté
    d'un boîtier de filtrage variant dans le temps (ZVF) servant au filtrage variant dans le temps d'un signal de sortie (OUT),
    d'une unité d'addition (S) servant à soustraire le signal de sortie du boîtier de filtrage variant dans le temps (ZVF)
    du signal d'entrée (IN) afin d'obtenir un signal de sortie (OUT),
    d'une unité d'estimation spectrale (SSE) servant à effectuer une estimation spectrale du signal d'entrée (IN), et
    d'une unité de calcul de coefficients de filtre (FKB) servant à calculer les coefficients du boîtier de filtrage variant
    dans le temps (ZVF) sur la base de l'estimation spectrale de l'unité d'estimation spectrale (SSE).

Fig.1

EP 1 813 026 B1

Fig.2

DSP_E

| | | ZFM | DEM | F | EDM | PPM | DA |

VCO

AD

HF — (+) — ZF — A/D — Dig. ZF Demodu-lation — Dem-phase — Filter — Expander Decoder — Post Processing — D/A

Status Info Decoder

Batteriestatus — BS
Kanalkennung — KK
Squelsch — SQ
Aux Info — AI
Mic Info — MI
Preamp Info — PI

SID

STUMM

Konfiguration

Controller/ Display

CDM

EP 1 813 026 B1

Eingangssignal
auf der ZF mit $f_0$

$\cos(2\pi f_0 t)$

90°

$\sim$ LO

$\sin(2\pi f_0 t)$

TP

TP

I (In-Phase-
Komponente)

Q (Quadrature-
Komponente)

## Fig.3

Eingangssignal
auf der ZF mit
$f_0 = f_s / 4$

$\cos(\pi/2\, n) = 1, 0, -1, 0, \ldots$ für n=0,1,2,3, ...

90°

$\sim$ NCO

$\sin(\pi/2\, n) = 0, 1, 0, -1, \ldots$ für n=0,1,2,3, ...

TP

TP

I

Q

## Fig.4

Eingangssignal
auf der ZF mit
$f_0 = k\, f_s / 4$

$I_0, Q_1, -I_2, -Q_3, I_4, Q_5, \ldots$

ADC

TP

I

Q

## Fig.5

$f_s = 528.395\text{kHz}$

$f_{od} = 132.099\text{kHz}$

Eingangssignal
auf der ZF mit
$f_0 = 10.7\text{MHz}$

ADC

TP

$\otimes$

TP

I

Q

DSP

## Fig.6

Fig.7

Fig.8

EIN O———[ K ]———[ T ]———[ E ]———O AUS

Kompressor    Übertragungs-    Expander

stelle

Fig.9

Version: Breitband

Fig.10a

Version: Multiband

Fig.10b

Version: Kontinuierliches Band

Continuous Band
Companding CBX

Version: Kontinuierliches Band

FKB

Berechnung
Filterkoeffizienten

Spektrale
Schätzung
LPC
Kurzzeit FFT    SSE

Zeitvariante
Filter    ZVF

IN    S    OUT

(+)

Fig.11a

Version: Kontinuierliches Band

SSE    FKB

Spektrale
Schätzung
LPC

Berechnung
Koeffizienten

ZVK

Zeitvariante
Filter

IN    –  S    OUT

(+)

Fig.11b

**IN DER BESCHREIBUNG AUFGEFÜHRTE DOKUMENTE**

**In der Beschreibung aufgeführte Patentdokumente**

- DE 3621513 C2
- DE 4130045 A1
- DE 69723959 T2
- US 5845216 A
- US 5222250 A
- US 6317613 B1
- US 3846719 A
- US 20040158458 A
- US 6219559 B1